(19) Europäisches Patentamt
European Patent Office
Office européen des brevets

(11) **EP 2 690 548 B1**

(12) **EUROPEAN PATENT SPECIFICATION**

(45) Date of publication and mention
of the grant of the patent:
**29.08.2018 Bulletin 2018/35**

(51) Int Cl.:
***G06F 9/32*** *(2018.01)*     ***G06F 9/30*** *(2018.01)*
***G06F 15/80*** *(2006.01)*

(21) Application number: **12275113.4**

(22) Date of filing: **26.07.2012**

(54) **Computer architecture with a hardware accumulator reset**

Computerarchitektur mit einem Hardware-Akkumulator-Reset

Architecture informatique avec une réinitialisation matérielle de l'accumulateur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.01.2014 Bulletin 2014/05**

(60) Divisional application:
**18184532.2**

(73) Proprietor: **Mobileye Vision Technologies Ltd.
Jerusalem 9777513 (IL)**

(72) Inventors:
• **Dogon, Gil Israel
95746 Jersalem (IL)**
• **Arbeli, Yosi
7532020 Rishon-Le-Zion (IL)**

• **Kreinin, Yosef
93585 Jerusalem (IL)**

(74) Representative: **Jehan, Robert
Williams Powell
Staple Court
11 Staple Inn Buildings
London, WC1V 7QH (GB)**

(56) References cited:
**GB-A- 2 382 672     GB-A- 2 464 292**

• **NIKOLAOS KAVVADIAS ET AL: "Elimination of
Overhead Operations in Complex Loop
Structures for Embedded Microprocessors",
IEEE TRANSACTIONS ON COMPUTERS, IEEE
SERVICE CENTER, LOS ALAMITOS, CA, US, vol.
56, no. 2, 1 February 2008 (2008-02-01), pages
200-214, XP011194980, ISSN: 0018-9340**

EP 2 690 548 B1

**Description**

BACKGROUND

1. Technical Field

The present invention relates to computer architecture.

2. Description of Related Art

During the last few years camera based driver assistance systems (DAS) have been entering the market; including lane departure warning (LDW), Automatic High-beam Control (AHC), pedestrian recognition, and forward collision warning (FCW). These driver assistance systems may use real time image processing of multiple patches detected in multiple image frames captured from a camera mounted in a vehicle.

Reduced instruction set computing is a processor design strategy based on a simplified instruction set and may provide higher performance if the simplicity enables much faster execution per instruction. A processor architecture based on this strategy is known herein as a reduced instruction set computer (RISC).

A vector processor, or array processor, is a processor that implements an instruction set containing instructions that operate on one-dimensional arrays of data called vectors. A scalar processor in comparison operates on a single datum. Most commonly used processors are scalar processors.

VLIW (Very Long Instruction Word) digital signal processing units contain several sub-processing units which operate in parallel. The VLIW contains multiple op-codes which direct the various sub-processing units, thus allowing for parallel processing since each sub-unit gets its op-code at the same time. An op-code is a portion of a machine language instruction that specifies an operation to be performed. Repeated instruction execution as disclosed by UK patent GB2382672A has a processing unit which includes an execution unit for executing an operation defined by an instruction on a pair of input values. A repeat control unit to cause the operation to be repeatedly executed on successive pairs of values. Each repeated execution generates an output value. The instruction includes a repeat indicator, which indicates the number of times the operation is to be executed for that instruction and a condition. The repeat control unit being operable in response to the repeat indicator to determine the number of times the operation is executed by the execution unit, and to cease repeated execution on detection that the output value no longer satisfies the condition whether or not the operation has been executed the number of times.

BRIEF SUMMARY

Thus, various embodiments of the present invention aim to reduce calculational overhead of image processing algorithms which may be used for instance in driver assistance systems.

According to an aspect of the present invention, there is provided a method for processing multidimensional zero-overhead loops (ZOLs), the method performable by a processor as specified in claim 1.

Multiple image patches may be input by the address generation unit (AGU 308a, 308b). The memory addresses for the image patches may be calculated by the address generation unit (AGU (308a, 308b). The image patches may be processed over multi-dimensional zero-overhead loops (ZOLs). The reset signal may be generated responsive to the memory addresses when an end of an innermost loop is reached. Breaking out of the multidimensional zero-overhead loops (ZOLs) may be avoided when the accumulator (36a, 36b) is reset. The first OR output may be stored in a shift register (506). An output from the shift register (506) may be logically ANDed with an output of a stage selection register (508), thereby to produce a second AND output. The second AND output may include second multiple outputs. The stage selection register (508) may specify a number of cycles after an event occurs for performing the reset of accumulator (36a, 36b). The second multiple outputs may be logically ORed together, to produce thereby a second OR output. The reset signal to the accumulator (36a, 36b) may be generated responsive to the second OR output. Multiple; image patches may be input by the address generation unit (AGU 308a, 308b). Memory addresses for the image patches may be calculated by the address generation unit (AGU 308a, 308b). A processing loop may be initiated by the processor (304) for processing of the image patches and during the processing the events may be generated responsive to the memory addresses. While the processing loop is processed, the accumulator (36a, 36b) of the processor (304) may be reset responsive to the one or more selected events. A number of cycles may be specified after the selected events and the reset of the accumulator (36a, 36b) may be generated after the specified number of cycles. After the selected event(s), a first number of cycles may be specified and a second number of cycles may be specified and resets of the accumulator (36a, 36b) may be generated after the specified first number and second number of cycles.

According to another aspect of the present invention, there is provided a processor system as specified in claim 8.

The system (30) may be operable to input multiple image patches by the address generation unit (AGU 308a, 308b). Memory addresses are calculated for the image patches by the address generation unit (AGU 308a, 308b). During processing the image patches over multi-dimensional zero-overhead loops (ZOLs), the reset signal is generated responsive to the memory addresses when an end of an innermost loop is reached.

The address generation unit (AGU 308a, 308b) may include a first address generation unit and a second address generation unit each configured to generate events. The logical circuitry (306a, 306b) is a first logical circuitry (306a) configured to receive the events generated by the first (308a) and second (308b) address generation units. The accumulator (36a, 36b) is a first accumulator (36a) operatively connected to the first logical circuitry (306a). The system (30) may further include a second logical circuitry (306b) configured to receive the events generated by the first and second address generation units. A second accumulator (36b) may be operatively connected to the second logical circuitry (306b). Responsive to the events, the first logical circuitry (306a) resets the first accumulator (36a) and the second logical circuitry (306b) resets the second accumulator (36b). The system (30) may be operable to avoid breaking out of the multidimensional zero-overhead loops (ZOLs) when the accumulators (36a,36b) are reset. The system (30) may further include a shift register (506) configured to store the first OR output and a stage selection register (508). An output from the shift register (506) is logically ANDed with an output of the stage selection register (508) to produce thereby a second AND output. The second AND output includes a second plurality of outputs. The stage selection register (508) may specify a number of cycles after an event occurs to reset the accumulator (36a, 36b). A logical OR gate (512b) operable to logically OR together the second plurality of outputs and to produce thereby; a second OR output and to generate the reset signal to the accumulator (36a, 36b) responsive to the second OR output. The shift register (506) may include bits which are shiftable to enable a history of instruction cycles to be kept.

The foregoing and/or other aspects will become apparent from the following detailed description when considered in conjunction with the accompanying drawing figures.

BRIEF DESCRIPTION OF THE DRAWINGS

Embodiments of the invention are described below by way of example only, with reference to the accompanying drawings, wherein:

Figures 1 and 2 illustrate a system including a camera or image sensor mounted in a vehicle, according to an embodiment of the present invention.
Figure 3 illustrates a system block diagram for an image processing system, according to an embodiment of the present invention.
Figure 4a illustrates a simplified system for resetting accumulators;
Figure 4b illustrates another simplified system for resetting accumulators;
Figure 5 shows a hardware implementation of an accumulator reset;
Figure 6a shows a method and Figure 6b which shows a method which may be a continuation of the method of Figure 6a; and
Figure 7 shows a method, according to a preferred embodiment of the present invention.

DETAILED DESCRIPTION

Reference will now be made in detail to embodiments of the present invention, examples of which are illustrated in the accompanying drawings, wherein like reference numerals refer to the like elements throughout. The features are described below to explain the teachings herein by referring to the Figures.

Embodiments of the present invention are applicable to processors designed for driver assistance systems, and other applications in digital processing for instance other image processing applications and/or audio processing applications.

By way of introduction, the basic concept of pipelined processing is to divide instruction execution into stages that operate independently. In pipelined execution, instructions may pass through the same stages as in an assembly line. With each new processor cycle, a new piece of data may be added to one end of the pipeline and a completed result may be retired out of the other end of the pipeline. Embodiments of the present invention are directed reducing calculational overhead with the use of digital logic circuitry for resetting an accumulator of a processor in real time. Resetting accumulators may be performed while executing a loop in hardware while avoiding breaking out of pipelined execution.

The terms "pipelining", "pipelined processing" "pipelined execution as used herein refers to a technique used in advanced microprocessors in which the processor begins executing a second instruction before the first has been completed. That is, several instructions are in the pipeline simultaneously, each at a different processing stage. The pipeline may be divided into segments and each segment may execute its operation concurrently, with other segments. When a segment completes an operation, the result is passed to the next segment in the pipeline and the next operation is fetched from the preceding segment. The terms "pipelining" and "pipelined processing" and "pipelined execution" are used herein interchangeably.

The resetting of accumulators according to embodiments of the present invention may find use in zero-overhead loops for given small/narrow image patches (from captured image frames) that are common in computer vision systems such as driver assistance systems (DASs). The resetting of accumulators may prevents the need to break out of a multidimensional zero-overhead loops (ZOLs) (or break pipelining) "just" to reset an accumulator. The resetting of accumulators according to embodiments of the present invention typically may expand the utility of multidimensional ZOLs.

The terms logical "AND", "ANDing" or "ANDed" as used herein refer to the function of a digital AND gate which logically ANDs together variables at the input to give at least one variable at the output.

The terms logical "OR", "ORing" or "ORed" as used herein refer to the function of a digital OR gate which logically ORs together variables at the input to give at least one variable at the output.

## Definition of "accumulator"

Basically, in the context of accumulator reset according to embodiments of the present invention, the term "accumulator" as used herein is a device which maintains a state. The state may be updated by an "accumulation instruction", which, in turn, is any instruction which functionally performs as:
state = function(state, inputs)
The most common accumulation function is addition: state = state + input
Vector accumulation may be reducing, non-reducing, or cumulative:

state = state + sum(input_vector) # reducing - 8+1 arguments, 1 result for i=0:8, state_vector[i] = state_vector[i] + input_vector[i] # non-reducing - 8+8 arguments, 1 result
prev_sum=state_vector[7]; for i=0:8, state_vector[i] = prev_sum + sum(input_vector for 0 to i) # cumulative

Another interesting case is when the function is other than / addition:

state = min(state,input)
state = max(state,input)
for i=0:8,

$$state\_histogram[input\_index[i]] = state\_histogram[input\_index[i]] +$$

$$input\_weight[i]]$$

All these examples herein above are "accumulators" in the sense that accumulator resets according to different features of the present invention may be applied to the accumulators.

## "Pipelining" in general versus "software pipelining" in VLIW machines

In general, accumulator reset according to features of the present invention may not be particularly useful on any processor just because the processor is pipelined. For example, consider the loop:

```
for y=0:H {
    acc=0
    for x=0:W {
    acc+=img(x,y)
    }
}
```

On a pipelined RISC processor, resetting the accumulator in software creates an overhead, but a relatively small one:
YLOOP:

SET ACC,0
XLOOP:
LOAD R0,img_next_addr //it would be more instructions, but let's ignore it here

```
ADD ACC,R0
BEQ X,W, XLOOP //end XLOOP
BEQ Y,H, YLOOP
```

Suppose W=8 which means that every 8 iterations, one instruction is spent - SET ACC,0 - to reset the accumulator. If every iteration costs 3 instructions - LOAD, ADD, BEQ - that is 1 instruction of "overhead" for 24 instructions of "useful work" - not that much. Furthermore, it does not matter much whether the processor is pipelined or not, at least it does not matter in any straightforward way. A pipelined RISC processor will or at least could execute all these instructions in a pipelined fashion - whether there is a SET ACC, 0 instruction occasionally being executed or not.

The overhead is much larger on VLIW machines, however, and not because of pipelining in general, but because of, specifically, software pipelining. On a VLIW machine, the loop would look like this:
YLOOP:

```
SET ACC,0 //X loop header assuming LOAD latency is 2 cycles, so we can't ADD anything for the first 2 cycles
LOAD R0,img_next_addr
LOAD R0,img_next_addr
XLOOP:
LOAD R0,img_next_addr *AND IN PARALLEL* ADD ACC,R0//X loop trailer handle values loaded by the last 2 loads
ADD ACC,R0
ADD ACC R0
```

On VLIW machines, pipelining is handled differently than, say, on RISC machines. Specifically, pipelining effects are visible to software: on a RISC machine, all instructions following LOAD R0... can assume R0 has the new value - not so on VLIW, where the ADD using the result of the LOAD should be placed two instructions down the road. The result of the LOAD placed two instructions down the road, has the benefit of simplifying hardware: a VLIW processor can issue multiple instructions at the same cycle - like in the example above, where LOAD and ADD are done, in the loop though not in the header or the trailer, simultaneously. A RISC processor can also place the result of the load two instructions down the road - super-scalar/out-of-order processors with RISC instruction sets do this but the cost is relatively complicated hardware mechanisms that analyze, at run-time, the dependencies between the instructions that RISC processors execute in order to figure out how to run the instructions in parallel, and whether it is at all logically possible to run the instructions in parallel.

The upshot is that VLIW with ZOLs, speed up the innermost loops significantly - there's one instruction instead of 3 or more - without complicating the hardware (as does a super-scalar processor that could actually run 3 instructions, or more, in parallel).

Now consider the overhead of resetting an accumulator on a VLIW machine compared to a single-issue RISC machine. Not only is one cycle per every 8 instructions paid- 1/8 is more than 1/24 - but a price is also paid for the header and the trailer. In our example, that is 2 cycles for the header and 2 cycles for the trailer - overall, 5 (1+2+2) cycles of overhead for 8 cycles of useful work.

Therefore, accumulator reset according to the teachings herein is particularly advantageous on a VLIW processor.

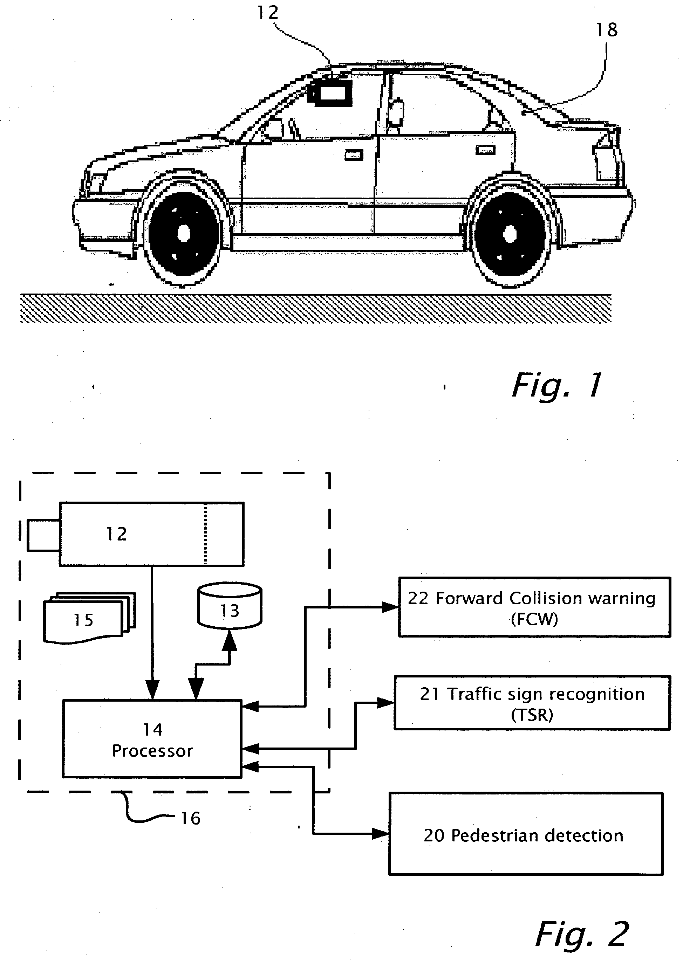

Reference is now made to Figures 1 and 2 which illustrate a system **16** including a camera or image sensor **12** mounted in a vehicle **18,** according to an embodiment of the present invention. Image sensor **12,** imaging a field of view in the forward direction provides image frames **15** in real time and image frames **15** are captured by an image processor **14.** Image processor **14** may be used to process image frames **15** simultaneously and/or in parallel to serve a number of driver assistance systems/applications. The driver assistance systems may be implemented using specific hardware circuitry with on board software and/ or software control algorithms in storage **13.** Image sensor **12** may be monochrome or black-white, i.e. without color separation or image sensor **12** may be color sensitive. By way of example in Figure 2, image frames **15** are used to serve pedestrian detection **20,** traffic sign recognition (TSR) **21** and forward collision warning (FCW) **22.** Image processor **14** is used to process image frames **15** to detect and recognize an image or portions of the image in the forward field of view of camera **12.**

Driver assistance systems may further include lane departure warning systems and headlight control systems. Most driver assistance applications require processing over multiple windows of a single frame and/or multiple image frames. In some cases, image frames **15** are partitioned between different driver assistance applications and in other cases the image frames **15** are shared between the different driver assistance applications.

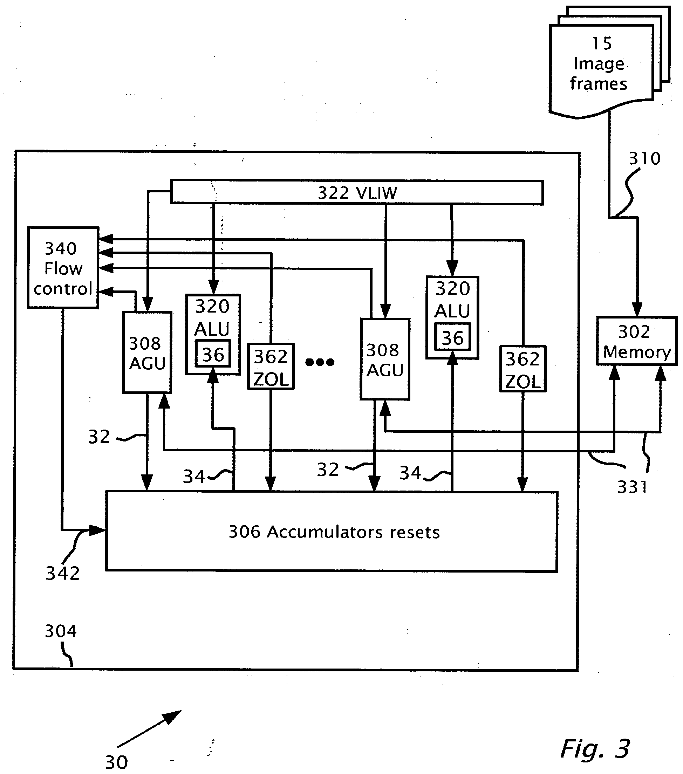

Reference is now made to Figure 3 which illustrates a system block diagram for an image processing system **30** according to an embodiment of the present invention. Image processing system **30** includes a vector processor **304** and a memory **302.** Memory **302** connects to an input of multiple image frames **15** via an image frame bus **310.** Vector processor **304** includes multiple arithmetic logic units (ALU) **320** and multiple address generators **308** which connect to multiple accumulators resets **306** via event line **32.** Multiple zero overhead (ZOL) modules **362** are connected to flow control **340** and multiple accumulators resets **306**. Address generators **308** connect to memory **302** with a memory bus **331**. Address generators **308** also connect to flow controller **340** which provides a flow control line **342** to multiple accumulators resets **306**. Arithmetic logic units (ALU) **320** and address generator **308** connect to a very long instruction word (VLIW) instruction register **322** via their own separate buses (thus allowing simultaneous execution of the relevant op-codes. ALUs **320** have accumulators **36** which are resettable via accumulators resets **306** through accumulator reset line **34.**

With traditional DSP-style zero-overhead loops (ZOLs), a machine repeatedly runs a piece of code, decrementing a counter until the counter becomes zero. At first glance, the counter works with rectangles from image patches or 1 dimensional (1D) arrays. Suppose a 1D array of size N takes N/8 iterations to process as may take place on a single instruction multiple data (SIMD) machine processing 8 data items at a time for example. So the ZOL counter is set to N/8. For a 2D rectangle of width W and height H, W*H/8 iterations are needed. A question may arise as to why not set the counter to W*H/8, and use ZOL as with 1D arrays? An answer to the question is the possible problem in maintaining X & Y coordinates. With 1D arrays, there is a 1D coordinate called i that gets the values, assuming increments of 8:

$$i=0$$
$$i=8$$
$$...$$
$$i=N$$

With 2D coordinates, X and Y, every time the end of a rectangle's row is reached, there is a special case:

X=0, Y=0 //next, increment X...
X=8, Y=0 //next, increment X...
...
X=W, Y=0 **//NOW, increment Y and reset X**
**X=0, Y=1** //next, increment X
...
X=W, Y=1 **//NOW, increment Y and reset X**
**X=0, Y=1** //next, increment X

The special case is handled by special code in the program, so it may not be possible to just run the same code W*H/8 times using a ZOL iteration counter. Similar issues may occur with 3D arrays, 4D arrays, etc., which may mean only the innermost dimension can be implemented using a traditional DSP ZOL and the outer dimensions become regular loops. For example:

for Y: //regular loop

for X: //a DSP-style ZOL

body

**X=0, Y++** //special case

Or, with 3D data, and different nesting - X is the outermost loop:

for X: //regular loop

for Y: //regular loop

for Z: //a DSP-style ZOL

body

**Z=0, Y++** //special case

Where the innermost dimension is implemented using a traditional DSP ZOL there may not be a problem when the innermost loop executes many times, but may become a problem when the inner loop executes just a few times. This way, the innermost loop is in fact "zero-overhead" - but the frequently executing outer loops are **not** zero-overhead. So there are significant overheads associated with breaking pipelined execution of the inner loops that traditional ZOLs with 1D data do not eliminate. These overheads are especially large for very large instruction word (VLIW) machines. SIMD and VLIW are basically orthogonal, there are SIMD VLIW machines, SIMD machines that are not VLIW, and VLIW machines that are not SIMD. Vector microcode processor (VMP) is both SIMD and VLIW, a prominent example of a SIMD VLIW machine is TI's C64 family for example.

In contrast to SIMD VLIW machines, vector processor **304** address generation units (AGUs) **308** allow use of a single ZOL by:

- Taking care of the special case - end-of-innermost-dimension - automatically in hardware. Every time an AGU **308** is issued a "next" command, the hardware checks for end-of-dimension conditions.

- Raising a "break out of the loop" signal for flow control unit **340** only at the end of the outermost loop (when so configured).

For example, a loop over 3D data can look like this:

```
my_iter=Iterator3D(base=..., xcount=..., ycount=..., zcount=...);
iterate { //a single ZOL
    data=my_iter.load(); //takes care of end-of-dimension conditions,
    breaks when all data is processed
     ...}
```

As explained above, it may be beneficial to stay inside a ZOL for as long as possible. An example of an overhead avoidable using a feature of the present invention is breaking out of a ZOL. Every time a break out occurs, loop trailer code is executed and every time a loop is re-entered, loop header code is executed by ZOL module **362**. AGUs **308** of vector processor **304** communications to flow control unit **340** are beneficial because their need to handle end-of-row conditions is eliminated. AGUs **308** of vector processor **304** communications to flow control unit **340** are beneficial also because the loop is entered and only quit at the end of the 2D region, not at the end of every row.

At the beginning of every row X is reset to its minimal coordinate and Y is incremented to the next row which may be handled by AGU **308** without needing to break out of the loop. We would, however, break out of the innermost loop over rows if something special is done at the beginning of every row. One of the most common things to be done at the beginning of rows is resetting an accumulator **36**. For a simple example, consider a horizontal integral image where

```
out (x, y) = sum (in(1: x, y)):
                for y:
                    acc = 0
                for x:
                    acc += in(x,y) // acc:=acc+in(x,y)
                    out(x,y) = acc
```

In this loop above, the same operation is done for all pixels in all rows, except for zeroing the accumulator **36** at the beginning. Therefore, if there is no accumulator reset, nested loops are used along the lines of:

```
iterate {
    A.reset();
    iterate {
        in=in_iter.load();
        low,hi=A.cumsum_8ub_8uh(in); //vectorized cumulative
        sum
        out_iter.store(low,hi);
        }
     }
```

In vector processor **304**, accumulator reset can be used to create a single loop:

```
iterate {
```

```
in=in_iter.load();
low,hi=A.cumsum_8ub_8uh(in,acc_reset=(in_iter,i));
out_iter.store(low,hi);
}
```

Vector processor **304** instructs the hardware to behave as follows. An event is signaled to the accumulator reset **306** every time the iterator in_iter reaches the end of its innermost loop (the loop over rows may be the innermost or it could be the loop over columns instead, depending on the programming of the iterator which is omitted from the example). Upon that event, the accumulator reset **306** zeros the accumulator **36** such that instead of updating the accumulator **36** as usual, the accumulator reset **306** resets the accumulator **36** and then updates the accumulator **36.**

The description above is different from simply resetting the accumulator **36** - that would be incorrect. For example, the need to compute the cumulative sum of the first 8 pixels in the row (just as well as the second 8-pixel tuple, then third, etc.), and resetting the accumulator **36** instead would get the first 8 pixels ignored. So accumulator reset **306** modifies the behavior of the cumsum instruction to the semantics, "reset the accumulator **36,** then do your job as usual". This is also how the accumulator reset works with other accumulation instructions - plain vectorized accumulation, dimension-reducing accumulation, etc.]

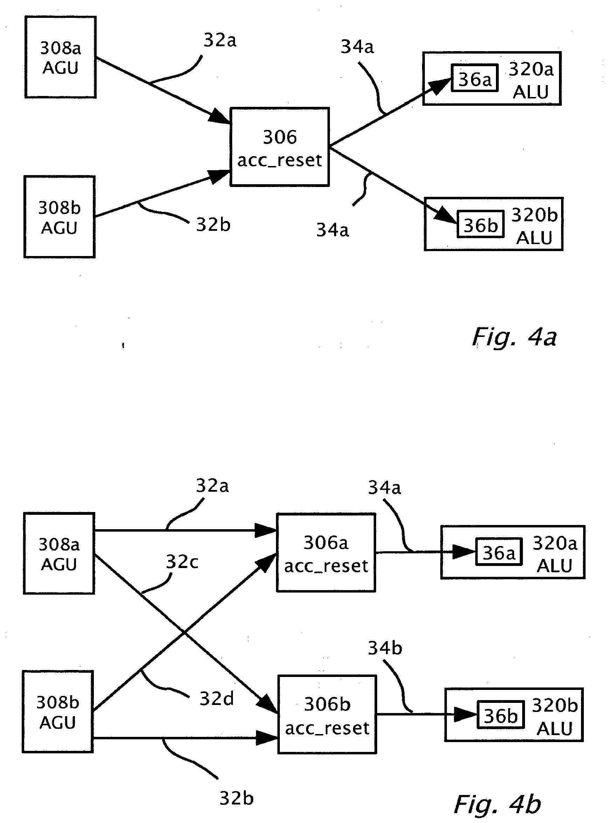

Reference is now made to Figures 4a and 4b which show different signaling schemes using two accumulators (not shown each in ALU **320** and a single accumulator reset (acc_reset) **306,** according to embodiments of the present invention. The terms" accumulator reset **306** and logical circuitry **306** are used herein interchangeably.

Referring specifically to Figure 4a, single accumulator reset (acc_reset) **306** may receive an event from AGU **308a,** AGU **308b** via respective event lines **32a** or **32b** and/ or from multiple ZOL modules **362**. In general the event comes from a place which is not the normally used instruction fetch/decode hardware. The event may occur at the beginning of a row, the end of a row or the last point in the image patches from captured image frames **15**. The event typically encodes an AGU **308** number (so that an event can come from any of the 2 AGUs **308a** or **308b** used in this example found in vector processor **304**) and the location in the 2/3/4D region of the image patches which upon reaching the event is signaled. The event can then be scheduled to provide a reset from accumulator reset **306** via reset lines **34** because some operations within vector processor **304** need the reset, some do not, and each operation happens at a different delay. Therefore at some point at a beginning-of-row or some other special iteration - and "at this point in time", an event is signaled that modifies the behavior of accumulator reset **306**. In reality, however, the AGU **308** will reach that iteration earlier than the accumulator reset due to modulo scheduling. Modulo Scheduling, another name for pipelining, is a form of instruction scheduling that interleaves different iterations of a loop. Based on the event flow controller **340** enables the reset from accumulator reset **306** to be applied to either accumulator **36a** of ALU **320a** and/ or accumulator **36b** of ALU **320b.**

In Figure 4b, AGU **308a** or AGU **308b** may have events provided to accumulator resets **306a** and **306b** via event lines **32a, 32b, 32c, 32d** and/ or from multiple ZOL modules **362**. Events from AGU **308a** may be provided to accumulator resets **306a** and/ or **306b**. Similarly events from AGU **308b** may be provided to accumulator resets **306a** and/ or **306b**. Resets from accumulator resets **306a** and **306b** via reset lines **34a** and **34b** respectively may be applied to respective accumulators **36a** and **36b** based on the events generated by AGU **308a** and/ or AGU **308b.**

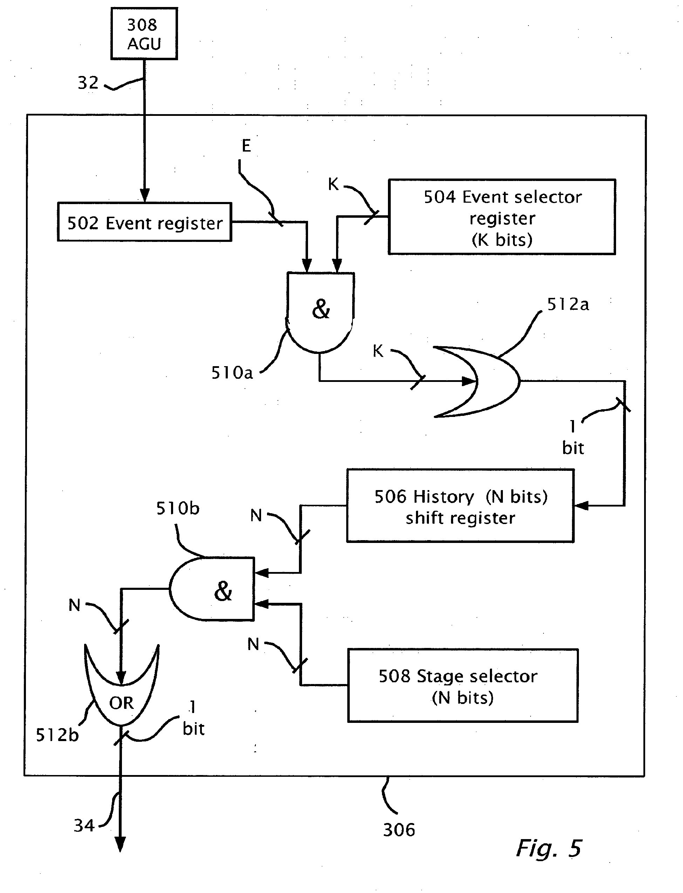

Reference is now made to Figure 5 which shows a hardware implementation of an accumulator reset **306,** according to a feature of the present invention. Multiple events **32** are input into event register **502**. The output of event register **502** is **E** bits which correspond with the events **32** which are logically 'ANDed' together with the **K** bits of event selector register **504** via AND gate **510a**. The **K** bit output of AND gate **510a** is then inputted into OR gate **512a,** where the **K** bits are ORed with each other, which gives a single bit output which is placed into history shift register **506**. The **N** bit output of history shift register **506** is then 'ANDed' with the **N** bits of stage selector **508** via AND gate **510b**. The **N** bit output of AND gate **510b** is then input into the **N** bit input of **OR** gate **512b**, where the **N** bits are ORed with each other to give a single bit output. The single bit output of OR gate **512a** may be the accumulator reset **34** shown in the previous Figures.

At this point in the explanation, the utility of the features taught herein should be clear, as well as the general way to achieve the utility of the teachings. In further detail, the core hardware mechanisms that make the utility of the features of the present invention actually work is shown below in the many different contexts where the features are useful. In particular, two things are taken into account:

- **Different event types.** Vector processor **304** AGUs **308** support 2D, 3D and 4D regions. A programmer might want an accumulator to be reset, not necessarily at the beginning of every row, but at many kinds of special locations within the 2/3/4D region.
- **Scheduling delays.** Logically, at some point at a beginning-of-row or some other special iteration - and "at this point in time", an event is signaled that modifies the behavior of the accumulator. In reality, however, the AGU **308** will reach that iteration earlier than the accumulator due to modulo scheduling. Furthermore, some operations need the reset, some do not, and each happens at a different delay.

Here is how the preferred hardware described above and specifically hardware implementation of accumulator resets shown in Figure 5 handles these concerns.

**Different event types**

In vector processor **304,** a hardware register called event selector register **504** keeps an event number, so that an accumulator reset **306** responds to an event chosen by the programmer. The event number encodes the AGU **308** number (so that an event can come from any of the 4 AGUs **308** used in this example found in vector processor **304**) and upon reaching the location in the 2/3/4D region an event is signaled. Specifically, vector processor **304** supports the following locations according to a list (the list could be extended - the locations were chosen based on the assumption that in vector microcode processor programs, these are the particularly useful locations):
In the list, **bold** names name location types, and non-bold i, z and w name internal AGU **308** counters corresponding to the current location. z is the location along the Z (3rd) region dimension, w is the location along the W (4th) region dimension, and i is the location of either the X (1st) or Y (2nd) dimension, depending on which of them is the innermost dimension - in a "for y { for x }" loop, i is the X dimension counter, and in a "for x { for y }" loop, i is the Y dimension counter.

> **i** - This condition will raise if (i= =0 & z==0 & w==0) - that is, once every time i reaches 0
> **z** - This condition will raise if (z==0 & w==0) - that is, once every time z reaches 0
> **w** - This condition will raise if w==0 - that is, once every time w reaches 0
> **iz** - This condition will raise if i==0 - that is, when i reaches 0, through all z iterations
> **zw** - This condition will raise if z==0 - that is, when z reaches 0, through all w iterations

The following pseudo-code illustrates when each of these events "fire" given an AGU **308** iterating over a 4D region such that X is the outermost dimension (it should be noted that AGUs **308** of vector processor **304** support either X or Y as their outermost region dimension, but not Z or W - Z is always nested in either X or Y, and W is always nested in Z; this explains why some of the obvious conditions that one could imagine are not available.)

```
void izw(int xcount, int ycount, int zcount, int wcount) {
    int x,y,z,w;
        for(x=0; x<xcount; ++x) {
            for(y=0; y<ycount; ++y) {
                for(z=0; z<zcount; ++z) {
                    for(w=0; w<wcount; ++w) {
                    int i=y; //y is our inner dimension
                    printf("x=%d y=%d z=%d w=%d", x, y, z, w);
                    printf(i==0 && z==0 && w==0? " i": " ");
                    printf(z==0 && w==0? " z": " ");
                    printf(w==0? " w": " ");
                    printf(i==0? " iz": " ");
                    printf(z==0? " zw": " ");
                    printf("\n");
                    }
                }
            }
        }
}
```

This will print, given counts of 2 for all dimensions:

```
x=0 y=0 z=0 w=0 i z w iz zw
x=0 y=0 z=0 w=1 iz zw
x=0 y=0 z=1 w=0 w iz
x=0 y=0 z=1 w=1 iz
x=0 y=1 z=0 w=0 z w zw
x=0 y=1 z=0 w=1 zw
x=0 y=1 z=1 w=0 w
x=0 y=1 z=1 w=1
```

```
x=1 y=0 z=0 w=0 i z w iz zw
x=1 y=0 z=0 w=1 iz zw
x=1 y=0 z=1 w=0 w iz
x=1 y=0 z=1 w=1 iz
x=1 y=1 z=0 w=0 z w zw
x=1 y=1 z=0 w=1 zw
x=1 y=1 z=1 w=0 w
x=1 y=1 z=1 w=1
```

**Scheduling delays**

In order to handle scheduling delays, a way is to:
Keep a history of events - a reaction to events several cycles after they happened, at precisely the cycle required. The reaction is so that there are some accumulation operations that are reset during the iteration in question, and other operations that are not.

Specify which operations react to the events - along the lines of, "the first two operations issued during the iteration need not be affected, but the third and the fourth are". Specifying which operations react to the events may be performed using two registers, software-programmable stage selector register **508** and an internal, hardware-maintained history shift register **506.**

History shift register 506 is a 32-bit shift register updated at every cycle as follows:
All bits are shifted to the left losing the most significant bit (MSB), so a history of at most 32 cycles is kept.

The least significant bit (LSB) is set to 1 if an AGU **308** issued a load/store command that incremented the counters of the AGU **308** such that a location was reached triggering the event type configured at event selector register **504.**

The behavior of an accumulator reset **306** is modified to reset accumulator **36** if an accumulation command is issued at a cycle when stage selector **508** & history shift register **506** != 0. i.e. not equal to zero, that is, when a bit is set. Stage selector **508** is thus used by software to specify the one or more number or numbers of cycles at which, after an event happens, reset should occur - in the hypothetical example of "third and fourth instructions", 2 bits corresponding to the delay between those instructions and the AGU **308** load/store command triggering the event would be set. That is, bits 7 and 9 are set, assuming that the 3rd instruction is issued 7 cycles after the AGU **308** load/store command and the 4th instruction is issued 9 cycles after the AGU **308** command. Stage selector **508** may be configured to select several stages.

Accumulator reset is a feature further expanding the utility of multidimensional ZOLs. Also there are specific reasons for accumulator reset **306** to be more useful when compared to the average general-purpose processor or DSP accelerator. Accumulator reset is useful, very specifically, when the accumulators **36** of ALUs **320** are reset every time through very short loops. Vector processor **304** has more such cases than the average processor because of having to process narrow regions of interest and because of running deeply nested loops with very short innermost dimensions, such as loops to implement some forms of matrix multiplication and filtering.

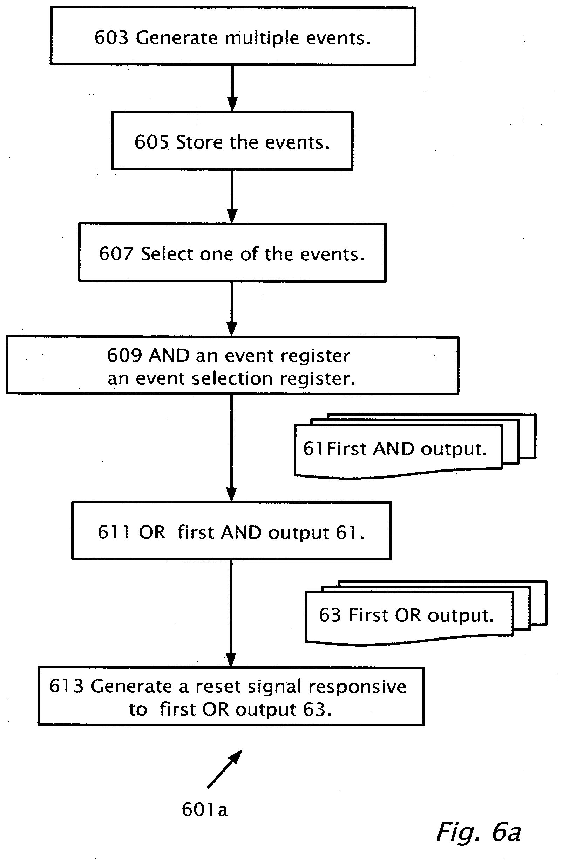

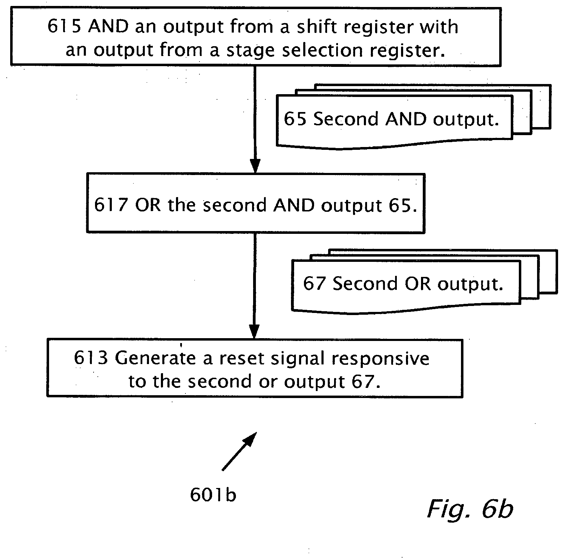

Reference is now made to Figure 6a which shows a method **601a** and Figure 6b which shows a method **601b** which may be a continuation of method **601a,** according to an embodiment of the present invention. In step **603** multiple events may be generated by an address generation unit (AGU) **308** and/ or ZOL module **362**. The events generated by the AGU **308** and/ or ZOL module **362** may be stored in memory **302** (step **605**) or passed accumulator resets **306** by event lines **32**. In step **607**, at least one of the events generated AGU **308** and/ or ZOL module **362** may be selected and multiple events **32** from AGU **308** and/ or ZOL module **362** are input into event register **502**. The output of event register **502** is **E** bits which correspond with multiple events **32** which is logically 'ANDed' together with the K bits of event selector register **504** via AND gate **510a** (step **609**). The K bit output **61** of AND gate **510a** is then inputted into OR gate **512b** (step **611**) which gives a single bit output **63** by virtue of the **K** bits ORed with each other. The single bit output **63** is placed into history shift register **506**. The single bit output **63** of OR gate **512a** may then be the basis for the accumulator reset **34** shown in the previous Figures.

Where the single bit output **63** of OR gate **512a** is not the basis for the accumulator reset **34** shown in the previous figures, the **N** bit output of history shift register **506** is then 'ANDed' with the **N** bits of stage selector **508** via AND gate **510b** (step **615**). The **N** bit output **65** of AND gate **510b** is then input into the **N** bit input of OR gate **512b** (step **617**), where the **N** bits are ORed with each other to give a single bit output **67.** The single bit output **67** of OR gate **512b** may then be the basis for the accumulator reset **34** shown in the previous Figures.

A simplistic implementation of steps **615** and **617** could have a constant delay (of 3 cycles for example), so there is no nee need for an AND and an OR in step **615** and **617** respectively. Rather, such an implementation would sample the event 3 times and use the oldest sample. A further simplification is not to have a history at all but rather reset the accumulator **36** immediately when the event arrives via event line **32**. An event history could be kept, for example, at the AGU **308** side which would give the same accumulator reset **306** idea shown above. The constant delay may also be applied to steps **609** and **611.**

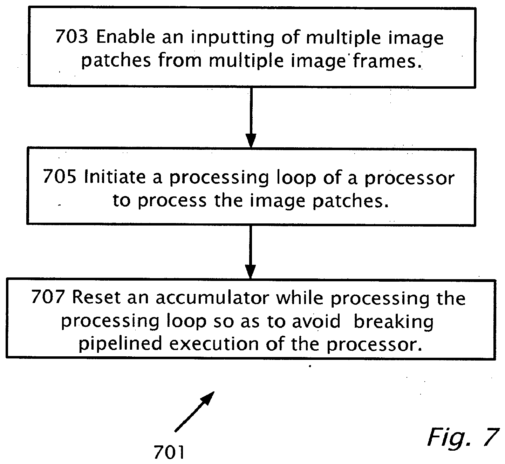

Reference is now made to Figure 7 which shows a method **701,** according to an embodiment of the present invention. As shown previously vector processor **304** includes multiple arithmetic logic units (ALU) **320** and multiple address generators **308** which connect to multiple accumulators resets **306** via event lines **32.** In step **703** multiple image patches from image frames **15** are inputted into processor **304** via memory **302.** In step **705** a processing loop for processing the image patches may be initiated. The processing of the image patches (step **705**) may be over multidimensional zero-overhead loops (ZOLs) supervised by ZOL module **362.** Resetting accumulator **36** (step **707**), while processing the processing loop, avoids breaking pipelined execution of processor **304.** The resetting of accumulator **36** in step **707,** also avoids breaking out of the multidimensional zero-overhead loops (ZOLs).

The indefinite articles "a", "an" is used herein, such as "an output", "an AND gate have the meaning of "one or more" that is "one or more outputs" or "one or more AND gates".

Although selected features of the present invention have been shown and described, it is to be understood the present invention is not limited to the described features.

**Claims**

1. A method for processing multidimensional zero-overhead loops (ZOLs), the method performable by a processor (304) including an accumulator (36a, 36b) and an address generation unit (AGU308a, 308b) operatively attached to the processor, wherein the address generation unit iterates over the multidimensional zero-overhead loop, the method including resetting the accumulator (36a, 36b), the method **characterised by**:

   upon reaching a location in the multidimensional zero-overhead loop, generating one or more events associated with the reached location by the address generation unit (AGU308a, 308b);
   storing said one or more events in an event register (502);
   responsive to a reset signal, resetting the accumulator (36a, 36b) to zero or an initial value while avoiding breaking pipelined execution of the processor (304), wherein said reseet signal is generated by:

      storing in an event selection register (504) an event number which specifies an event chosen by a programmer so that the accumulator reset responds to the event chosen by the programmer;
      logically ANDing a first input from said event register (502) with a second input from the event selection register (504) thereby producing a first AND output including a first plurality of outputs, and logically ORing together the first plurality of outputs, thereby producing a first OR output;
      responsive to said first OR output, generating the reset signal to the accumulator (36a, 36b).

2. A method according to claim 1, including:

   inputting a plurality of image patches by said address generation unit (AGU 308a, 308b);
   calculating the memory addresses for said image patches by the address generation unit (AGU (308a, 308b);
   during processing the image patches over multi-dimensional zero-overhead loops (ZOLs), said reset signal is generated responsive to the memory addresses when an end of an innermost loop is reached.

3. A method according to claim 2, including:
   avoiding breaking out of the multidimensional zero-overhead loops (ZOLs) when the accumulator (36a, 36b) is reset.

4. A method according to claim 3, including:

   storing said first OR output in a shift register (506);
   logically ANDing an output from said shift register (506) with an output of a stage selection register (508), thereby producing a second AND output, wherein said second AND output includes a second plurality of outputs; wherein said stage selection register (508) specifies a number of cycles after an event occurs for performing said resetting;
   logically ORing together said second plurality of outputs, thereby producing a second OR output; and
   said generating said reset signal to the accumulator (36a, 36b) responsive to said second OR output.

5. A method according to any preceding claim, including:

   inputting a plurality of image patches by the address generation unit (AGU 308a, 308b);

calculating memory addresses for said image patches by the address generation unit (AGU 308a, 308b); initiating a processing loop for processing by the processor (304) said image patches; and during said processing, generating said at least one event responsive to said memory addresses; while processing said processing loop, said resetting the accumulator (36a, 36b) of the processor (304) responsive to said at least one selected event.

6. A method according to claim 5, including:

specifying a number of cycles after said at least one selected event; and said generating said reset of said accumulator (36a, 36b) after said specified number of cycles.

7. A method according to claim 5 or 6 including:

after said at least one selected event, specifying a first number of cycles and a second number of cycles; and said generating resets of said accumulator (36a, 36b) after said specified first number and second number of cycles.

8. A system (30) for processing multidimensional zero-overhead loops (ZOLs), the system comprising: an address generation unit (AGU 308a, 308b) for iterating over the multidimensional zero-overhead loop, the address generation unit being operatively attached to a processor (304) including an accumulator (36a, 36b), the system **characterised by**:

the address generation unit (AGU 308a, 308b) configured upon reaching a location in the multidimensional zero-overhead loop, to generate one or more events associated with the reached location; an event register (502) configured to store said one or more events; an event selection register (504) configured to store an event number which specifies an event chosen by a programmer so that an accumulator reset responds to the event chosen by the programmer; a logical AND gate (510a) having a first input from said event register, a second input from said event selection register (504) and a first AND output including a first plurality of outputs, and logical circuitry (306a, 306b) including a logical OR gate (512a) operable to logically OR together the first plurality of outputs, to produce a first OR output, wherein said reset signal to the accumulator (36a, 36b) is generated responsive to said first OR output, wherein the accumulator (36a, 36b) is reset to zero or an initial value while avoiding breaking pipelined execution of the processor (304).

9. A system (30) according to claim 8, wherein the system (30) is operable to:

input a plurality of image patches by said address generation unit (AGU 308a, 308b); calculate memory addresses for said image patches by the address generation unit (AGU 308a, 308b); during processing the image patches over multi-dimensional zero-overhead loops (ZOLs), said reset signal is generated responsive to the memory addresses when an end of an innermost loop is reached.

10. A system (30) according to claim 8, wherein the at least one address generation unit (AGU 308a, 308b) includes a first address generation unit and a second address generation unit each configured to generate events, wherein said logical circuitry (306a, 306b) is a first logical circuitry (306a) configured to receive the events generated by the first (308a) and second (308b) address generation units; wherein the accumulator (36a, 36b) is a first accumulator (36a) operatively connected to said first logical circuitry (306a); the system (30) including:

a second logical circuitry (306b) configured to receive the at least one event generated by the first and second address generation units; a second accumulator (36b) operatively connected to said second logical circuitry (306b);

wherein responsive to said events, the first logical circuitry (306a) resets the first accumulator (36a) and the second logical circuitry (306b) resets the second accumulator (36b).

11. A system (30) according to claim 8, 9 or 10, operable to avoid breaking out of the multidimensional zero-overhead loops (ZOLs) when the accumulators (36a, 36b) are reset.

12. A system (30) according to any one of claims 8 to 11, including:

a shift register (506) configured to store said first OR output;
a stage selection register (508);
wherein an output from said shift register (506) is logically ANDed with an output of said stage selection register (508) to produce thereby a second AND output, wherein said second AND output includes a second plurality of outputs; wherein said stage selection register (508) specifies a number of cycles after an event occurs to reset the accumulator (36a, 36b);
a logical OR gate (512b) operable to logically OR together said second plurality of outputs, to produce thereby a second OR output and to generate said reset signal to the accumulator (36a, 36b) responsive to said second OR output.

13. A system (30) according to claim 12, wherein said shift register (506) includes bits which are shiftable to enable a history of instruction cycles to be kept.

**Patentansprüche**

1. Verfahren zur Verarbeitung mehrdimensionaler Zero-Overhead-Loops (ZOLs), wobei das Verfahren durch einen Prozessor (304) mit einem Akkumulator (36a, 36b) und einer Adresserzeugungseinheit (AGU308a, 308b) durchführbar ist, die betriebsmäßig mit dem Prozessor verbunden ist, wobei die Adresserzeugungseinheit über die mehrdimensionale Zero-Overhead-Loop iteriert, wobei das Verfahren das Zurücksetzen des Akkumulators (36a, 36b) umfasst, wobei das Verfahren **gekennzeichnet ist durch**:

bei Erreichen einer Stelle in der mehrdimensionalen Zero-Overhead-Loop, Erzeugen eines oder mehrerer Ereignisse, die mit der erreichten Stelle durch die Adresserzeugungseinheit (AGU308a, 308b) verknüpft sind;
Speichern des einen oder der mehreren Ereignisse in einem Ereignisregister (502);
in Reaktion auf ein Rückstellsignal, Zurücksetzen des Akkumulators (36a, 36b) auf Null oder einen Anfangswert unter Vermeiden einer Unterbrechung der Pipeline-Verarbeitung des Prozessors (304), wobei das Rückstellsignal erzeugt wird **durch**:

Speichern in einem Ereignisauswahlverzeichnis (504) einer Ereignisnummer, die ein von einem Programmierer gewähltes Ereignis spezifiziert, so dass das Zurücksetzen des Akkumulators auf das vom Programmierer gewählte Ereignis reagiert;
logisches UND-Verknüpfen eines ersten Eingangs von dem Ereignisregister (502) mit einem zweiten Eingang von dem Ereignisauswahlregister (504), wodurch ein erster UND-Output umfassend eine erste Vielzahl von Outputs erzeugt wird, und logisches ODER-Verknüpfen der ersten Vielzahl von Outputs, wodurch ein erster ODER-Output erzeugt wird;
in Reaktion auf den ersten ODER-Output, Erzeugen des Rücksetzsignals an den Akkumulator (36a, 36b).

2. Verfahren nach Anspruch 1, umfassend:

Eingeben einer Vielzahl von Bildpatches durch die Adressenerzeugungseinheit (AGU 308a, 308b);
Berechnen der Speicheradressen für die Bildpatches durch die Adressenerzeugungseinheit (AGU (308a, 308b);
wobei, während der Verarbeitung der Bildpatches über mehrdimensionale Zero-Overhead-Loops (ZOLs), das Rücksetzsignal als Antwort auf Speicheradressen generiert wird, wenn ein Ende einer innersten Loop erreicht wird.

3. Verfahren nach Anspruch 2, umfassend:
Vermeiden eines Ausbrechens aus den mehrdimensionalen Zero-Overhead-Loops (ZOLs), wenn der Akkumulator (36a, 36b) zurückgesetzt wird.

4. Verfahren nach Anspruch 3, umfassend:

Speichern des ersten ODER-Outputs in einem Schieberegister (506);
logisches UND-Verknüpfen eines Ausgangs von dem Schieberegister (506) mit einem Ausgang eines Stufenauswahlregisters (508); wodurch ein zweiter UND-Output erzeugt wird, wobei der zweite UND-Output eine zweite Vielzahl von Outputs enthält; wobei das Stufenauswahlregister (508) eine Anzahl von Zyklen spezifiziert, nachdem ein Ereignis zum Durchführen des Rücksetzens eintritt;

logisches ODER-Verknüpfen der zweiten Vielzahl von Outputs, wodurch ein zweiter ODER-Output erzeugt wird; und

das Erzeugen des Rücksetzsignals an den Akkumulator (36a, 36b) in Reaktion auf den zweiten ODER-Output.

5. Verfahren nach einem vorhergehenden Anspruch, umfassend:

Eingeben einer Vielzahl von Bildpatches durch die Adresserzeugungseinheit (AGU 308a, 308b);

Berechnen von Speicheradressen für die Bildpatches durch die Adresserzeugungseinheit (AGU 308a, 308b);

Initiieren einer Verarbeitungsloop zum Verarbeiten der Bildpatches durch den Prozessor (304); und

während des Verarbeitens Erzeugen des mindestens einen Ereignisses als Antwort auf die Speicheradressen;

wobei, während des Verarbeitens der Verarbeitungsloop, das Zurücksetzen des Akkumulators (36a, 36b) des Prozessors (304) als Antwort auf das wenigstens eine ausgewählte Ereignis erfolgt.

6. Verfahren nach Anspruch 5, umfassend:

Spezifizieren einer Anzahl von Zyklen nach dem wenigstens einen ausgewählten Ereignis; und

das Erzeugen des Zurücksetzens des Akkumulators (36a, 36b) nach der spezifizierten Anzahl von Zyklen.

7. Verfahren nach Anspruch 5 oder 6 umfassend:

nach dem wenigstens einen ausgewählten Ereignis Spezifizieren einer ersten Anzahl von Zyklen und einer zweiten Anzahl von Zyklen; und

das Erzeugen von Zurücksetzvorgängen des Akkumulators (36a, 36b) nach der angegebenen ersten Anzahl und zweiten Anzahl von Zyklen.

8. System (30) zum Verarbeiten mehrdimensionaler Zero-Overhead-Loops (ZOLs), wobei das System aufweist: eine Adressenerzeugungseinheit (AGU 308a, 308b) zum Iterieren über die mehrdimensionale Zero-Overhead-Loop, wobei die Adressenerzeugungseinheit operativ an einen Prozessor (304) mit einem Akkumulator (36a, 36b) angeschlossen ist, wobei das System **gekennzeichnet ist durch**:

die Adresserzeugungseinheit (AGU 308a, 308b), die beim Erreichen einer Stelle in der mehrdimensionalen Zero-Overhead-Loop konfiguriert ist, um ein oder mehrere Ereignisse zu erzeugen, die der erreichten Stelle zugeordnet sind;

ein Ereignisregister (502), das so konfiguriert ist, dass es ein oder mehrere Ereignisse speichert;

ein Ereignisauswahlregister (504), das konfiguriert ist, um eine Ereignisnummer zu speichern, die ein von einem Programmierer gewähltes Ereignis speuifiziert, so dass ein Zurücksetzen des Akkumulators als Reaktion auf das vom Programmierer gewählte Ereignis erfolgt;

ein logisches UND-Glied (510a) mit einem ersten Eingang aus dem Ereignisregister, einem zweiten Eingang aus dem Ereignisauswahlregister (504) und einem ersten UND-Output umfassend eine erste Vielzahl von Outputs, und

eine logische Schaltung (306a, 306b) mit einem logischen ODER-Glied (512a), das so betreibbar ist, dass es die erste Vielzahl von Outputs logisch ODER verknüpft, um einen ersten ODER-Output zu erzeugen, wobei das Rücksetzsignal an den Akkumulator (36a, 36b) in Reaktion auf den ersten ODER-Output erzeugt wird, wobei der Akkumulator (36a, 36b) auf Null oder einen Anfangswert zurückgesetzt wird, während ein Unterbrechen einer PipelineVerarbeitung des Prozessors (304) vermieden wird.

9. System (30) nach Anspruch 8, wobei das System (30) betreibbar ist:

um eine Vielzahl von Bildpatches durch die Adresserzeugungseinheit (AGU 308a, 308b) einzugeben;

um Speicheradressen für die Bildpatches durch die Adresserzeugungseinheit (AGU 308a, 308b) zu berechnen;

wobei während des Verarbeitens der Bildpatches über mehrdimensionale Zero-Overhead-Loops (ZOLs) das Rücksetzsignal als Antwort auf die Speicheradressen generiert wird, wenn ein Ende einer innersten Loop erreicht wird.

10. System (30) nach Anspruch 8, wobei die wenigstens eine Adressenerzeugungseinheit (AGU 308a, 308b) eine erste Adressenerzeugungseinheit und eine zweite Adressenerzeugungseinheit umfasst, die jeweils zur Erzeugung von Ereignissen konfiguriert sind,

wobei die logische Schaltung (306a, 306b) eine erste logische Schaltung (306a) ist, die konfiguriert ist, um die von der ersten (308a) und zweiten (308b) Adressenerzeugungseinheit erzeugten Ereignisse zu empfangen;
wobei der Akkumulator (36a, 36b) ein erster Akkumulator (36a) ist, der mit der ersten logischen Schaltung (306a) wirkverbunden ist;
wobei das System (30) umfasst:

eine zweite logische Schaltung (306b), die so konfiguriert ist, dass sie das mindestens eine Ereignis empfängt, das von der ersten und zweiten Adressgenerierungseinheit erzeugt wird;
einen zweiten Akkumulator (36b), der mit der zweiten logischen Schaltung (306b) wirkverbunden ist;
wobei die erste logische Schaltung (306a) den ersten Akkumulator (36a) zurücksetzt und die zweite logische Schaltung (306b) den zweiten Akkumulator (36b) zurücksetzt.

11. System (30) nach Anspruch 8, 9 oder 10, das betreibbar ist, um ein Ausbrechen aus den mehrdimensionalen Zero-Overhead-Loops (ZOLs) zu vermeiden, wenn die Akkumulatoren (36a, 36b) zurückgesetzt werden.

12. System (30) nach einem der Ansprüche 8 bis 11, umfassend:

ein Schieberegister (506), das konfiguriert ist, um den ersten ODER-Output zu speichern;
ein Stufenauswahlregister (508);
wobei ein Ausgang von dem Schieberegister (506) logisch UNDverknüpft ist mit einem Ausgang des Stufenauswahlregisters (508), um dadurch einen zweiten UND-Output zu erzeugen, wobei der zweite UND-Output eine zweite Vielzahl von Outputs enthält; wobei das Stufenauswahlregister (508) eine Anzahl von Zyklen spezifiziert, nachdem ein Ereignis eintritt, um den Akkumulator (36a, 36b) zurückzusetzen;
ein logisches ODER-Glied (512b), das betreibbar ist, um die zweite Vielzahl von Outputs zusammen logisch ODER zu verknüpfen, um dadurch einen zweiten ODER-Output zu erzeugen und das Rücksetzsignal an den Akkumulator (36a, 36b) als Antwort auf den zweiten ODER-Output zu erzeugen.

13. System (30) nach Anspruch 12, wobei das Schieberegister (506) Bits umfasst, die verschiebbar sind, um eine Historie von zu behaltenden Befehlszyklen zu ermöglichen.

**Revendications**

1. Procédé pour le traitement de boucles multidimensionnelles de surcharge zéro (ZOL), le procédé étant exécutable par un processeur (304) comprenant un accumulateur (36a, 36b) et unité de génération d'adresse (AGU308a, 308b) associée de manière opérationnelle au processeur, dans lequel l'unité de génération d'adresse répète la boucle multidimensionnelle de surcharge zéro, le procédé comprenant la réinitialisation de l'accumulateur (36a, 36b), le procédé étant **caractérisé par** :

une fois une position atteinte dans la boucle multidirectionnelle de surcharge zéro, générer un ou plusieurs événements associés à la position atteinte par l'unité de génération d'adresse (AGU308a, 308b) ;
enregistrer ledit ou lesdits plusieurs événements dans un registre d'événements (502) ;
répondre à un signal de réinitialisation, réinitialiser l'accumulateur (36a, 36b) à zéro ou à une valeur initiale tout en évitant de rompre l'exécution en pipeline du processeur (304), le signal de réinitialisation étant généré par :

l'enregistrement d'un numéro d'événement pour la position atteinte dans un registre de sélection d'événement (504), ce qui précise un événement choisi par un programmateur de façon que la réinitialisation de l'accumulateur réponde à un événement choisi par le programmateur;
une analyse logique d'une première entrée ET à partir du registre d'événements (502) avec une seconde entrée à partir du registre de sélection d'événements (504), produisant ainsi une première sortie ET comprenant une première pluralité de sorties, et une réunion logique de la première pluralité de sorties, produisant ainsi une première sortie OU ;
en réponse à ladite première sortie OU, la génération d'un signal de réinitialisation de l'accumulateur (36a, 36b).

2. Procédé selon la revendication 1, comprenant les étapes de :

saisir une pluralité de parcelles d'image par ladite unité de génération d'adresse (AGU 308a, 308b) ;

calculer des adresses de mémoire pour lesdites parcelles d'image par l'unité de génération d'adresse (AGU 308a, 308b) ;

pendant le traitement des parcelles d'image par les boucles multidimensionnelles de surcharge zéro (ZOL), ledit signal de réinitialisation étant généré en réponse à des adresses mémoire lorsque la fin d'une boucle la plus interne est atteinte.

**3.** Procédé selon la revendication 2, comprenant l'étape de :
éviter de rompre les boucles multidimensionnelles de surcharge zéro (ZOL) lorsque l'accumulateur (36a, 36b) est réinitialisé.

**4.** Procédé selon la revendication 3, comprenant les étapes de :

stocker ladite première sortie OU dans un registre à décalage (506);
analyser logiquement une sortie ET à partir du registre à décalage (506) avec une sortie d'un registre de sélection d'étape (508), produisant ainsi une seconde sortie ET, ladite seconde sortie ET comprenant une seconde pluralité de sorties; dans lequel ledit registre de sélection d'étape (508) spécifie un nombre de cycles après qu'un événement se produise pour effectuer ladite réinitialisation;
analyser logiquement le OU avec ladite deuxième pluralité de sorties, produisant ainsi une deuxième sortie OU; et
générer ledit signal de réinitialisation à l'accumulateur (36a, 36b) en réponse à ladite seconde sortie OU.

**5.** Procédé selon l'une quelconque des revendications précédentes, comprenant les étapes de :

saisir une pluralité de parcelles d'image par une unité de génération d'adresse (AGU 308a, 308b) ;
calculer des adresses de mémoire pour lesdites parcelles d'image par l'unité de génération d'adresses (AGU 308a, 308b) ;
initier une boucle de traitement pour traiter par le processeur (304) lesdites parcelles d'image; et
pendant ledit traitement, générer ledit au moins un événement en réponse auxdites adresses de mémoire;
lors du traitement de ladite boucle de traitement, réinitialiser l'accumulateur (36a, 36b) du processeur (304) en réponse audit au moins un événement sélectionné.

**6.** Procédé selon la revendication 5, comprenant les étapes de :

spécifier un nombre de cycles après ledit au moins un événement sélectionné; et
générer ladite réinitialisation dudit accumulateur (36, 36b) après ledit nombre spécifié de cycles.

**7.** Procédé selon la revendication 5 ou 6, comprenant les étapes de :

après ledit au moins un événement sélectionné, spécifier un premier nombre de cycles et un second nombre de cycles; et
générer lesdites réinitialisations dudit accumulateur (36a, 36b) après ledits premier et second nombres spécifiés de cycles.

**8.** Un système (30) pour le traitement de boucles multidimensionnelles de surcharge zéro (ZOL), le système comportant : une unité de génération d'adresse (AGU308a, 308b) pour exécuter la boucle multidimensionnelle de surcharge zéro, l'unité de génération d'adresse étant opérationnellement associée au processeur (304) comprenant l'accumulateur (36a, 36b), le système étant **caractérisé par** :

l'unité de génération d'adresse (AGU308a, 308b) configurée pour atteindre une position dans la boucle multidimensionnelle de surcharge zéro, pour générer un ou plusieurs événements associés à la position atteinte ;
un registre d'événements (502) configuré pour enregistrer un ou plusieurs événements ;
un registre de sélection d'événement (504) configuré pour enregistrer un nombre d'événement qui spécifie un événement sélectionné par un programmeur de façon qu'une réinitialisation de l'accumulateur réponde à un événement sélectionné par le programmeur ;
une porte logique ET (510a) ayant une première entrée provenant dudit registre d'événements, une seconde entrée provenant dudit registre de sélection d'événements (504) et une première sortie ET comprenant une première pluralité de sorties, et
un circuit logique (306a, 306b) comprenant une porte logique OU (512a) apte à analyser logiquement le OU avec la première pluralité de sorties, pour produire une première sortie OU, dans lequel ledit signal de réinitialisation à l'accumulateur (36a, 36b) est réinitialisé à zéro ou à une valeur initiale tout en évitant de rompre l'exécution en pipeline du processeur (304).

**9.** Système (30) selon la revendication 8, dans lequel le système (30) est apte à

saisir une pluralité de parcelles d'image par ladite unité de génération d'adresse (AGU 308a, 308b) ;

calculer des adresses mémoire pour lesdites parcelles d'image par l'unité de génération d'adresse (AGU 308a, 308b) ;

pendant le traitement des parcelles d'image par les boucles multidimensionnelles de surcharge zéro (ZOL), ledit signal de réinitialisation est généré en réponse à des adresses mémoire lorsque la fin d'une boucle la plus interne est atteinte.

**10.** Système (30) selon la revendication 8, dans lequel au moins une unité de génération d'adresse (AGU 308a, 308b) comprend une première unité de génération d'adresse et une seconde unité de génération d'adresse pour générer des événements,

dans lequel ledit circuit logique (306a, 306b) est un premier circuit logique (306a) configuré pour recevoir les événements générés par les première (308a) et seconde (308b) unités de génération d'adresse ;

dans lequel l'accumulateur (36a, 36b) est un premier accumulateur (36a) connecté de manière opérationnelle audit premier circuit logique (306a) ;

le système (30) comprenant :

un second circuit logique (306b) configuré pour recevoir au moins un événement généré par les première et seconde unités de génération d'adresse ;

un second accumulateur (36b) connecté de manière opérationnelle audit second circuit logique (306b) ;

dans lequel en réponse auxdits événements, le premier circuit logique (306a) réinitialise le premier accumulateur (36a) et le second circuit logique (306b) réinitialise le second accumulateur (36b).

**11.** Système (30) selon la revendication 8, 9 ou 10, apte à permettre d'éviter de rompre les boucles multidimensionnelles de surcharge zéro (ZOL) lorsque les accumulateurs (36a, 36b) sont réinitialisés.

**12.** Système (30) selon l'une quelconque des revendications 8 à 11, comprenant :

un registre à décalage (506) configuré pour enregistrer ladite première sortie OU;

un registre de sélection d'étape (508);

dans lequel une sortie dudit registre à décalage (506) est logiquement associée à une sortie dudit registre de sélection d'étape (508) pour produire ainsi une seconde sortie ET, dans lequel ladite deuxième sortie ET comprend une seconde pluralité de sorties; dans lequel ledit registre de sélection d'étape (508) spécifie un nombre de cycles après qu'un événement se produise pour réinitialiser l'accumulateur (36a, 36b);

une porte logique OU (512b) pouvant fonctionner logiquement en OU avec ladite seconde pluralité de sorties, pour produire ainsi une seconde sortie OU et générer ledit signal de réinitialisation à l'accumulateur (36a, 36b) en réponse à ladite seconde sortie OU.

**13.** Système (38) selon la revendication 12, dans lequel ledit registre à décalage (506) comprend des bits qui sont décalés pour permettre de conserver un historique des cycles d'instruction.

*Fig. 1*

22 Forward Collision warning (FCW)

21 Traffic sign recognition (TSR)

20 Pedestrian detection

14 Processor

*Fig. 2*

*Fig. 3*

Fig. 4a

Fig. 4b

*Fig. 5*

*Fig. 6a*

615 AND an output from a shift register with
an output from a stage selection register.

65 Second AND output.

617 OR the second AND output 65.

67 Second OR output.

613 Generate a reset signal responsive
to the second or output 67.

601b

*Fig. 6b*

703 Enable an inputting of multiple image patches from multiple image frames.

705 Initiate a processing loop of a processor to process the image patches.

707 Reset an accumulator while processing the processing loop so as to avoid breaking pipelined execution of the processor.

701

*Fig. 7*

**EP 2 690 548 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2382672 A